# EUROPEAN PATENT APPLICATION

(11) **EP 4 759 407 A1**
(43) Date of publication of application: **17.06.2026**
(21) Application number: 25196704.8
(22) Date of filing: 19.08.2025
(51) Int. Cl.: B01J 20/26, B01J 20/28, B01J 20/34, B01D 53/02, B01D 53/04, B01D 53/047

(54) **FIBER, FIBER FILM AND ACID GAS ADSORBING-RELEASING MATERIAL**

(30) Priority: 19.09.2024 JP 2024162566
(71) Applicant: Kabushiki Kaisha Toshiba, Kawasaki-shi, Kanagawa 212-0013 (JP)
(72) Inventor: UCHIDA, Kenya, KANAGAWA, 212-0013 (JP); UEMATSU, Ikuo, KANAGAWA, 212-0013 (JP); EGUCHI, Keita, KANAGAWA, 212-0013 (JP); TOKUNO, Yoko, KANAGAWA, 212-0013 (JP); HIRAKAWA, Masaaki, KANAGAWA, 212-0013 (JP)
(74) Representative: AWA Sweden AB

(57) **Abstract**

According to one embodiment, a fiber (1) including an adsorbing element having an acid gas adsorption ability is provided.

## Description

### FIELD

The present disclosure relates to a fiber, a fiber film, and an acid gas adsorbing-releasing material.

### BACKGROUND

A technique for causing carbon dioxide to be absorbed into an absorbent, such as an amine, is used in a carbon dioxide capture and storage (CCS) plant, such as one in a thermal power plant, and is regarded as a most promising candidate as a technique for global warming prevention. The absorbent that has absorbed carbon dioxide is generally heated in a regeneration tower, thereby being regenerated by releasing the carbon dioxide, and repeatedly used. A general temperature for heating at this time is about 140°C, consuming great energy. Heat and energy required for regeneration are also called heat duty or energy penalty.

In addition, use of a porous material as a carbon dioxide adsorbent is also known. Since a porous material has a relatively large specific surface area, adsorption of a large amount of gas or organic molecules is capable through selection of suitable pore size and/or an organic group with high carbon dioxide affinity, and thus, use of such properties in applications such as gas storage, gas separation, catalyst, and reaction field is being considered. Known porous materials include zeolite, porous silica, porous alumina, porous carbon materials, silsesquioxanes, metal-organic frameworks (MOF), covalent-organic frameworks (COF), Hydrogen-bonded organic frameworks (HOF), porous materials obtained by modifying pores of these porous materials with amine molecules, and the like. Even when such a porous material is used, the carbon dioxide adsorbent is basically regenerated by heating, and energy saving is required, similarly to an absorbent such as an amine.

As an energy-saving regeneration method, there is a method by which adsorbed carbon dioxide is substituted with water vapor. Carbon dioxide is released from the adsorbent by a substitution reaction of adsorbed carbon dioxide with water vapor. According to this method, the heating temperature can be lowered to 100°C or lower, but water vapor is contained in the released gas in addition to carbon dioxide. Therefore, the process of cooling the released gas and condensing the water vapor, to thereby separate the water vapor from the carbon dioxide is added at a subsequent stage. Therefore, although energy saving can be achieved as compared with thermal desorption, the method can hardly be said to be optimal as a method for regenerating an absorbent.

### BRIEF DESCRIPTION OF DRAWINGS

FIG. 1 is a perspective view schematically showing an example of a fiber according to an embodiment.
FIG. 2 is a perspective view schematically showing another example of the fiber according to the embodiment.
FIG. 3 is a perspective view schematically showing another example of the fiber according to the embodiment.
FIG. 4 is a perspective view schematically showing another example of the fiber according to the embodiment.
FIG. 5 is a perspective view schematically showing an example of a fiber film according to an embodiment.
FIG. 6 is a perspective view schematically showing another example of the fiber film according to the embodiment.
FIG. 7 is a perspective view schematically showing another example of the fiber film according to the embodiment.
FIG. 8 is a partial see-through view schematically showing an example of a method for manufacturing a fiber film according to the embodiment.

### DETAILED DESCRIPTION

According to one embodiment, a fiber including an adsorbing element having an acid gas adsorption ability is provided.

According to another embodiment, a fiber film including the above fiber is provided.

According to another embodiment, an acid gas adsorbing-releasing material including a member and a fiber structure body on the member is provided. The fiber structure body includes the above fiber or the above fiber film.

Atmospheric air is mostly composed of nitrogen (N₂) and oxygen (O₂), and a concentration of carbon dioxide (CO₂) in the air is low. Therefore, in a case where CO₂ in the air is recovered by direct air capture (DAC) technology, an airflow volume of the air in a recovery device or equipment is increased, making electric power for a blower used for blowing the air great or a pressure loss of the CO₂ adsorption member great. On top of that, a large amount of energy is required for recovering CO₂ adsorbed onto the adsorption member. In addition, due to an increase in size of the equipment, limitations arise in locations where the equipment can be installed and scenes where the equipment can be used.

According to an embodiment, a fiber is provided. The fiber contains an adsorbing element having an acid gas adsorption ability. In addition, a fiber film containing the fiber is provided. The fiber and fiber film can realize an acid gas adsorbing-releasing material having a high adsorption-release efficiency of an acid gas such as CO₂.

The fiber is, for example, a fiber composed by a resin having an acid gas adsorption ability or a fiber obtained by combining a resin and an element having an acid gas adsorption ability. The fiber film may be, for example, a nonwoven fabric containing the fiber. By making a structure having an acid gas adsorption ability take a fibrous form, the surface area thereof is increased, so that the adsorption efficiency and the release efficiency of acid gas can be increased. The fiber is preferably a nanofiber. By utilizing an ultrafine nanofiber in DAC technology, the pressure loss can be reduced, so that DAC equipment can be driven with lower energy. Furthermore, the energy for releasing the gas can also be reduced.

Such a fiber and a fiber film containing the fiber can reversibly adsorb and release acid gas according to a change in atmospheric conditions. The atmospheric conditions referred to herein include, for example, temperature, humidity, and pressure (atmospheric pressure). By lowering the temperature of the atmosphere containing the acid gas in which the fiber or the fiber film is present, the acid gas is adsorbed onto the adsorbing element. By raising the temperature of the atmosphere, the acid gas adsorbed onto the adsorbing element is released. The acid gas is adsorbed onto the adsorbing element by lowering the humidity, and the acid gas adsorbed onto the adsorbing element is released by raising the humidity. The acid gas is adsorbed onto the adsorbing element by raising the pressure, and the acid gas adsorbed onto the adsorbing element is released by lowering the pressure.

The fiber can be manufactured by, for example, an electrospinning method (ES method). A fiber film containing such a fiber can be manufactured by the ES method, as well. In addition, since the fibers can be applied onto various members by the ES method, post-impartation of an acid gas adsorption-release function to already-existing products is possible. Specifically, by performing electrospinning using a material liquid containing a polymer material having an acid gas adsorption ability, a fiber or a fiber film formed of a resin having an acid gas adsorption ability can be manufactured. Alternatively, by performing electrospinning using a material liquid containing a low molecular weight material or a particulate adsorbent having an acid gas adsorption ability, together with a polymer material having no acid gas adsorption ability as a fiber-forming aid, a resin can be combined with an element having an acid gas adsorption ability to form a composite, to thereby manufactured the fiber or fiber film. Since the latter method can also be employed, the gas adsorbing element applicable to the fiber is not limited to polymer materials, and various highly functional adsorbents can also be used as the gas adsorbing element.

The fiber may contain therein an adsorbing element having an acid gas adsorption ability. A primary constituent component of the fiber may have an acid gas adsorption ability, or the adsorbing element may be dissolved or dispersed in or kneaded into the fiber. In the latter case, a concentration of the adsorbing element may be uniform in the fiber, or the concentration at an outer periphery may be higher than the concentration at a center in a radial cross section of the fiber. When the adsorbing element is concentrated at a fiber surface as in the latter case, the adsorbing element can be made better use of in adsorbing acid gas, making the gas adsorption-release efficiency is high. For example, in a fiber having a core-sheath structure, the concentration of the adsorbing element in a sheath portion may be increased. Alternatively, a gradient in which the concentration of the adsorbing element increases from the center of the radial cross section toward the fiber surface may be provided. Either structure can be achieved by controlling conditions when producing the fiber film by the ES method. Alternatively, a coating having a higher concentration of the adsorbing element may be applied onto the fiber surface.

The fiber may contain the adsorbing element having acid gas adsorption ability in an element located on the fiber surface. For example, a fiber supporting fine particles containing an adsorbing element or a solid adsorbent containing an adsorbing element may be composed. Alternatively, in a fiber having a core-sheath structure, the adsorbing element may be contained in the sheath. The element containing the adsorbing element, for example, the fine particles or the adsorbent may be supported on the fiber film. When such an element is provided, the core of the fiber having the core-sheath structure or the fiber itself contained in the fiber film may or may not contain an adsorbing element.

The fiber is not limited to a solid structure, and may have a structure including vacancy. For example, the fiber may have a hollow structure. Alternatively, the fiber may have a porous structure. Such a nanofiber structure including vacancies has a larger surface area than a nanofiber including no vacancy. By increasing the surface capable of adsorbing an acid gas, the gas adsorption-release ability of the fiber and the fiber film using the fiber can be increased.

Embodiments will be described, hereinafter, with reference to the drawings.

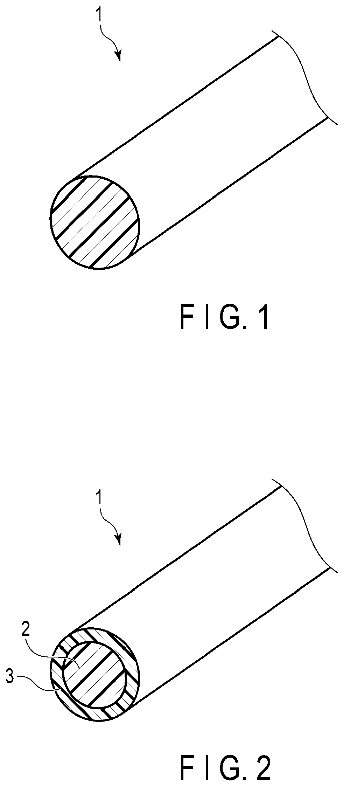

FIG. 1 schematically shows an example of a fiber according to an embodiment. A fiber 1 shown in FIG. 1 has a solid structure. The fiber 1 is a fiber consisting of an adsorbing element having an acid gas adsorption ability, or a fiber in which a structural component of the fiber and an adsorbing element are combined into a composite, and can adsorb and release an acid gas. In a specific example, the adsorbing element is contained in a uniform concentration throughout the fiber 1. In another specific example, the adsorbing element is contained in a higher concentration at an outer peripheral portion than at a central portion in a radial cross-section (for example, a circular cross-section shown on the left front side) of the fiber 1. Alternatively, the concentration of the adsorbing element may have a concentration gradient in which the concentration increases from the center of the radial cross-section toward the outer periphery. Preferably, a large amount of the adsorbing element is contained at a position close to a surface of the fiber 1 that would contact the acid gas. For example, the fiber 1 having a core-sheath structure as shown in FIG. 2, which has a higher concentration of the adsorbing element in the sheath 3 than in the core 2, can be formed.

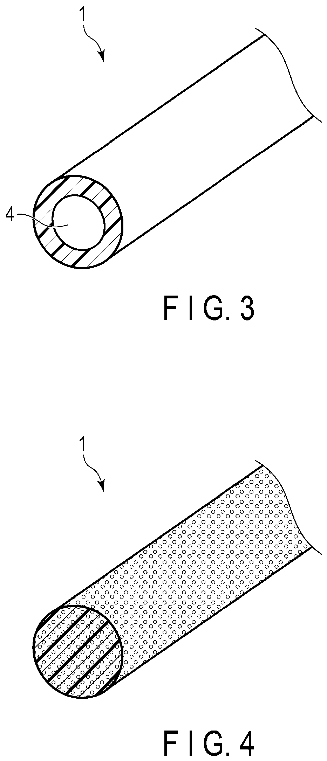

FIGS. 3 and 4 schematically show other examples of the fiber according to the embodiment. Fibers 1 shown in FIGS. 3 and 4 are examples of fibers including vacancies of different forms. The example shown in FIG. 3 is a fiber 1 having a hollow structure including an internal cavity 4 as the vacancy. The example shown in FIG. 4 is a fiber 1 having a porous structure having numerous pores as vacancies. As in these examples, since the fiber 1 including vacancy has a large surface area, a large amount of acid gas can be adsorbed. The amount of the adsorbing element is desirably large toward the surface, regardless of whether that surface is an inner surface or an outer surface of the fiber 1; namely, a desirable concentration distribution is one in which the adsorbing element is concentrated near the outer surface of the fiber 1, an inner wall of the internal cavity 4, and an inner surface of the pore. For the fiber 1 having the hollow structure in FIG. 3, the fiber length in the longitudinal direction is preferably short. For example, by cutting the fiber 1 short to increase the cross section in which the internal cavity 4 is visible, the inner wall of the internal cavity 4 can be efficiently used for gas adsorption. For the fiber 1 having the porous structure in FIG. 4, the pores are preferably connected to each other to form a continuous pore, rather than the pores existing independently.

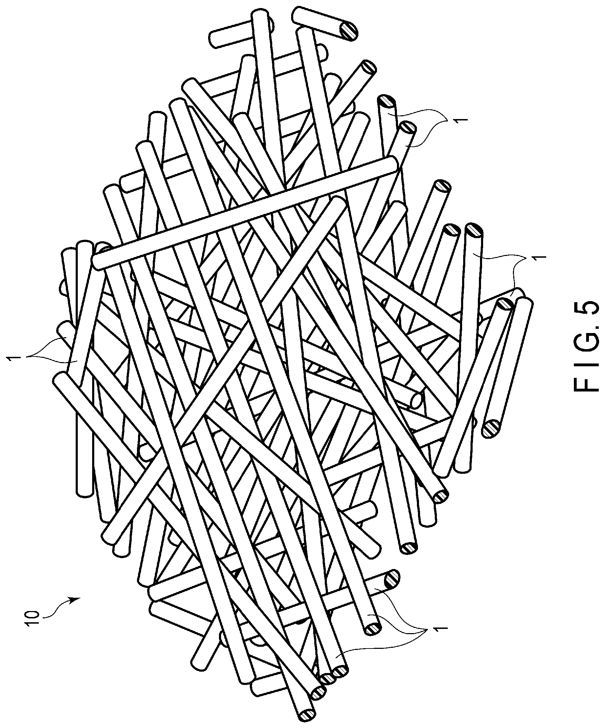

FIGS. 5 to 7 show examples of a fiber film. A fiber film 10 shown in each figure may be, for example, a nonwoven fabric made of the fiber 1.

The example shown in FIG. 5 is, for example, a fiber film 10 containing the fiber 1 shown in FIG. 1, in which the fiber 1 contains an adsorbing element.

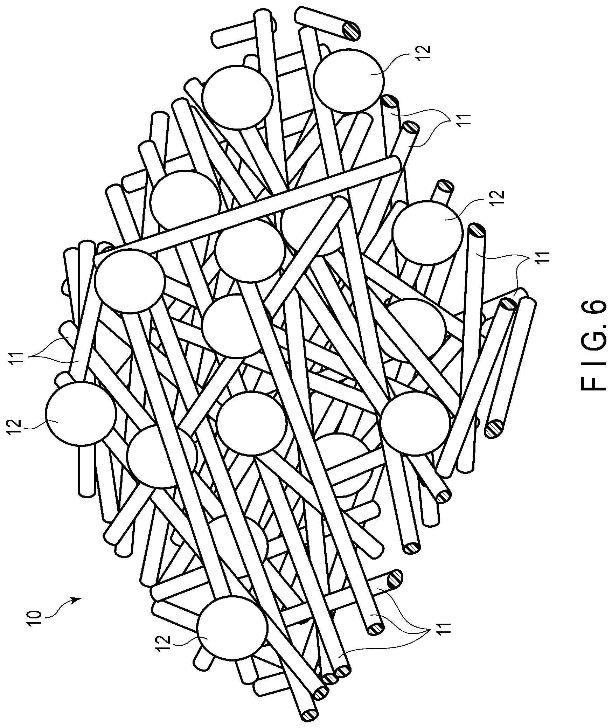

FIG. 6 shows a fiber film 10 in which an adsorbing element-containing particle 12 is supported on a film made of fibers 11, as an example of a film provided with an element containing an adsorbing element. The fibers 11 may be, for example, fibers that do not themselves contain any element having acid gas adsorption ability. Alternatively, the fiber 11 may be, for example, a fiber including an adsorbing element, such as the fibers 1 shown in FIGS. 1 to 4.

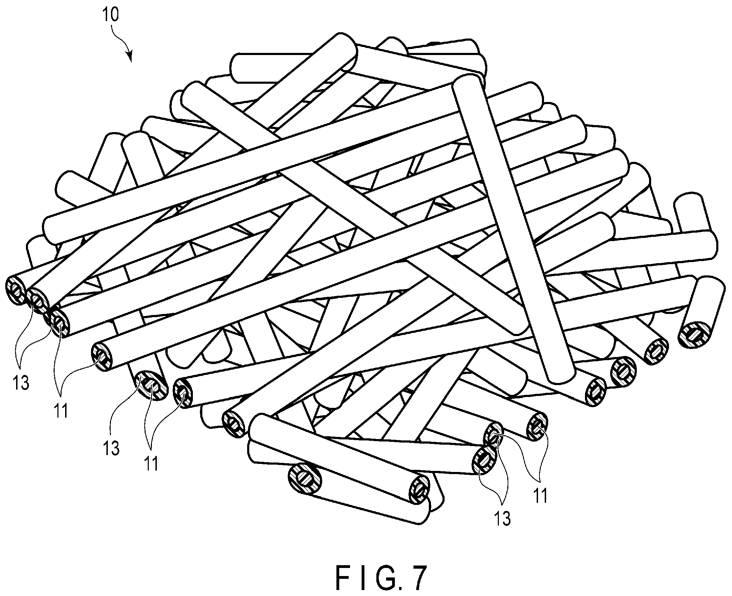

In FIG. 7, as another example of a film provided with an element containing the adsorbing element, shown is a fiber film 10 covered with a coating containing the adsorbing element. The fibers 11 composing the fiber film is covered with an adsorbing element coating 13. The fibers 11 may be, for example, fibers that do not themselves contain any element having acid gas adsorption ability. The adsorbing element coating 13 covering the fiber 11 exhibits acid gas adsorption ability. For example, after a film made of the fibers 11 is formed, the obtained film is covered with the adsorbing element coating 13, so as to obtain the fiber film 10. Alternatively, the fibers 11 may be covered with the adsorbing element coating 13 before or simultaneously with film formation.

Although no example is shown, the fiber having an acid gas adsorption ability or the fiber film having an acid gas adsorption ability described above can be provided on any member of choice, so as to configure an acid gas adsorbing-releasing material. Namely, the acid gas adsorbing-releasing material includes a member, and a fiber structure body provided thereon and containing the fiber having acid gas adsorption ability. Since the fiber structure body can be easily provided on various members as described later, various forms of acid gas adsorbing-releasing materials can be realized.

In addition, a system for separating and recovering an acid gas can be configured using the fiber having an acid gas adsorption ability or the fiber film having an acid gas adsorption ability described above. For example, the fiber or the fiber film is installed in a flow path of a mixed gas containing an acid gas, for example, air, and the mixed gas is passed through a web of the fiber or the fiber film. The fiber or the fiber film can also be formed directly on a constituent member of the separation and recovery system. Application of the fiber exhibiting gas adsorption ability allows configuration of a system capable of separating and recovering an acid gas with high efficiency.

For example, when treating a mixed gas that is continuously discharged, such as factory exhaust, a system capable of continuously separating and recovering an acid gas is desirable. Specific examples of such a separation and recovery system may include one including two columns each configured to separate and recover an acid gas. In one example of operation mode, adsorption and release of the acid gas is alternately performed in each of the two columns, so that continuity of processing can be maintained with respect of the whole system. In another example of operation mode, a member including a fiber or fiber film having gas adsorption ability is transported back and forth between the two columns, so as to perform gas adsorption in one column, and perform gas release and recovery in the other column.

The adsorbing element having acid gas adsorption ability included in the fiber includes, for example, one or more selected from the group consisting of polymer components, chain amines, cyclic amines, amino acids, amino acid salts, ionic liquids, porous ceramics, and organic-metal complexes.

A polymer component having an acid gas adsorption ability may be used to form the fiber. As the polymer component having an acid gas adsorption ability, for example, at least one selected from the group consisting of polyvinyl alcohol (PVA), polyethyleneimine (PEI), and polyimide may be used.

Examples of chain amines having an acid gas adsorption ability include ethanolamine.

Examples of cyclic amines having an acid gas adsorption ability include piperazine.

Examples of an amino acid having an acid gas adsorption ability include arginine. The amino acids may be used as a constituent component of the fiber in the form of, for example, oligopeptides, or the amino acid may be dispersed in another fiber constituent component.

An ionic liquid may, for example, be kneaded into a resin composing the fiber. Specific examples of ionic liquids having an acid gas adsorption ability include an imidazolium-based ionic liquid.

Examples of porous ceramics having an acid gas adsorption ability include zeolite.

An organic-metal complex having acid gas adsorption ability may be, for example, a metal complex containing a transition metal such as ruthenium, rhodium, copper, nickel, or cobalt as a central metal. The organic-metal complex may contain a functional group having a molecular structure including, for example, triphenylphosphine or tricyclohexylphosphine, as a ligand exhibiting adsorption-release ability for an acid gas.

A primary constituent part of the fiber may also be formed of a material other than the gas adsorbing element. For example, the adsorbing element described above may be used together with the polymer material, so as to obtain a fiber that is a composite between the two. The polymer material is not particularly limited, and may be appropriately switched according to the material for the fiber or the fiber film to be formed. In one example, one or more selected from the group consisting of polyamide and polyamideimide may be used as the polymer material. Other polymer materials that may be used include, for example, polypropylene, polyethylene, polystyrene, polyethylene terephthalate, polyvinyl chloride, polycarbonate, nylon, polyvinyl alcohol, polyester, celluloses, aramid, and the like.

The fiber is preferably a nanofiber. Therefore, a fiber diameter of less than 1 µm is preferable, and a fiber diameter of 600 nm or less is more preferable. Since the specific surface area is increased due to the fiber being a nanofiber, the adsorption performance can be enhanced with respect to acid gas.

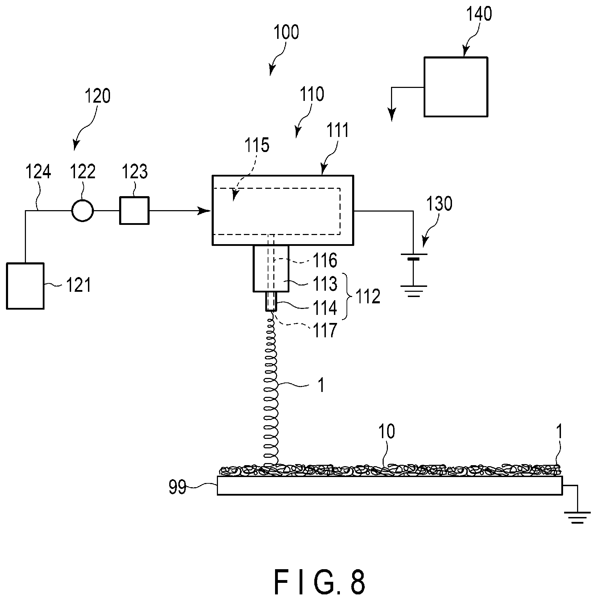

An example of formation of a fiber film by an electrospinning method will be described in detail with reference to FIG. 8.

An electrospinning device 100 shown in FIG. 8 includes electrospinning heads 110 and material liquid supply sources (suppliers) 120 as electrospinning equipment, and further includes power supplies 130 and a controller 140.

The electrospinning heads 110 include a head main body 111 and an electrospinning nozzle 112. The electrospinning nozzle 112 is provided on the outer surface of the head main body 111. Each of the head main body 111 and the electrospinning nozzle 112 is made of an electrically conductive material.

The number of electrospinning nozzles 112 is not particularly limited and may be set discretionarily as long as at least one electrospinning nozzle 112 is provided. Each of the head main body 111 and the electrospinning nozzle 112 is preferably made of a material resistant to a material liquid (to be described later), and for example, is made of stainless steel.

A storage hollow 115 is formed inside the head main body 111. The same number of flow paths (nozzle flow paths) 116 as the number of electrospinning nozzles 112 is formed in the electrospinning head 110, and a corresponding flow path 116 is formed inside each electrospinning nozzle 112. An end of each flow path 116 communicates with the storage hollow 115, and extends from the storage hollow 115 toward the outside of the head main body 111. An ejection port 117 is formed at the end of each flow path 116 opposite to the storage hollow 115, and each of the flow paths 116 opens out to the exterior at the ejection port 117. A respective ejection port 117 corresponding to each flow path 116 is formed at a distal end of each electrospinning nozzle 112 protruding from the head main body 111.

The electrospinning nozzle 112 may be, for example, a needle-type nozzle. In the example shown in the figure, the electrospinning nozzles 112 include a nozzle base 113 and a needle section 114. In the electrospinning nozzle 112, the nozzle base 113 is connected to the head main body 111 and forms a base of the protrusion from the head main body 111. Moreover, in the electrospinning nozzle 112, the needle section 114 further protrudes from the nozzle base 113 toward the outer periphery of the electrospinning head 110 and forms a protruding end from the head main body 111. The ejection port 117 is formed at a distal end of the needle section 114. The outer diameter of the needle section 114 is smaller than that of the nozzle base 113. The shape of the electrospinning nozzle 112 is not limited to the example shown in the figure.

The material liquid supply sources 120 include a material liquid storage 121, a material liquid supply drive 122, a material liquid supply adjuster 123, and a material liquid supply pipe 124. Each of the material liquid storage 121, the material liquid supply drive 122, the material liquid supply adjuster 123, and the material liquid supply pipe 124 is resistant to the material liquid; in one example, each of the material liquid storage 121 and the material liquid supply pipe 124 is made of an insulating material such as a fluorine resin.

The material liquid storage 121 is, for example, a tank configured to store material liquid. The material liquid may be, for example, a material liquid obtained by dissolving a constituent material of the fiber in a solvent. In one example, a liquid obtained by mixing an adsorbing element having an acid gas adsorption ability with a solution obtained by dissolving a polymer material in a solvent may be used as the material liquid. Each of the materials contained in the material liquid and the solvent for dissolving the materials are appropriately determined according to the material species of the fiber film to be formed and the like.

Any solvent may be used for the material liquid as long as it can dissolve the constituent material of the fiber such as the polymer material. The solvent may be switched as appropriate in accordance with the material to be dissolved therein. Examples of the solvent include water, methanol, ethanol, isopropyl alcohol, acetone, benzene, toluene, N-methyl-2-pyrolidone (NMP), and dimethylacetamide (DMAc).

The material liquid supply pipe 124 connects the material liquid storage 121 with the head main body 111 of the electrospinning head 110. A flow path for the material liquid is formed inside the material liquid supply pipe 124. The material liquid supply pipe 124 is connected to the head main body 111, whereby the storage hollow 115 communicates with the interior of the material liquid supply pipe 124.

When the material liquid supply drive 122 is driven, the material liquid supply drive 122 supplies the material liquid from the material liquid storage 121 to the storage hollow 115 of the head main body 111 through the material liquid supply pipe 124. In one example, the material liquid supply drive 122 is a pump. In another example, the material liquid supply drive 122 supplies gas to the material liquid storage 121 to thereby deliver the material liquid from the material liquid storage 121 to the storage hollow 115 by pressure. The storage hollow 115 can store the material liquid supplied through the material liquid supply pipe 124.

The material liquid supply adjuster 123 adjusts the amount of flow, pressure, etc. of the material liquid supplied to the electrospinning head 110. In one example, the material liquid supply adjuster 123 includes a control valve capable of controlling the amount of flow, pressure, etc., of the material liquid. In this case, the material liquid supply adjuster 123 adjusts the amount of flow, pressure, etc. of the material liquid as appropriate based on the viscosity of the material liquid, the structure of the electrospinning nozzle 112, and the like. In another example, the material liquid supply adjuster 123 is capable of switching between supplying and halting the supply of the material liquid from the material liquid storage 121 to the electrospinning head 110. In this case, the material liquid supply adjuster 123 is, for example, a switching valve.

The material liquid supply drive 122 and the material liquid supply adjuster 123 need not necessarily be provided. In one example, the material liquid storage 121 is provided vertically above the head main body 111, so that the material liquid is supplied from the material liquid storage 121 to the electrospinning head 110 utilizing gravity. In this case, operations such as switching between supplying and halting the supply of the material liquid can be performed by adjusting the height difference between the head main body 111 and the material liquid storage 121.

In the embodiment, the electrospinning heads 110, which the electrospinning device 100 includes as electrospinning units configured to eject a material of the fiber film from the ejection port thereof, are not limited to the structure shown in the figure. Other than such electrospinning heads 110 as included in the electrospinning device 100 shown in the figure and provided with one or more electrospinning nozzles 112, the electrospinning device may include, as an electrospinning equipment or electrospinning unit, for example, an electrospinning nozzle to which a material is directly supplied from the material liquid supply source, or a nozzle-less electrospinning head which does not include an electrospinning nozzle but includes material liquid flow path(s) and ejection port(s) at locations other than a nozzle. In addition, for example, nanofibers having a core-sheath structure and hollow nanofibers can be formed by using a coaxially different diameter spinneret or the like as the electrospinning unit. In addition, porous nanofibers can be formed by eluting a specific component from nanofibers containing a plurality of components.

The power supply 130 can apply a potential to the electrospinning head 110. When potential is applied to the electrospinning head 110, a potential of a predetermined polarity is applied to the electrospinning nozzle 112 via the head main body 111. When a plurality of electrospinning nozzles 112 are provided, potentials of the same polarity are applied to the electrospinning nozzles 112. The potential is applied to the electrospinning head 110 by the power supply 130 as described above, and the material liquid is supplied to the electrospinning head 110 by the material liquid supply adjuster 123, whereby the material liquid is electrified in the same polarity as the electrospinning nozzle 112 (electrospinning head 110).

In one example, a terminal (not shown) electrically connected to each of the electrospinning nozzles 112 is provided, and the power supply 130 applies a potential to each of the electrospinning nozzles 112 through the terminal. In this case, the head main body 111 need not be made of an electrically conductive material. The polarity of the potentials applied to the electrospinning nozzles 112 may be positive or negative. In the examples shown in the respective figures, the power supply 130 is a direct current power source, and applies a positive potential to the electrospinning nozzles 112.

In the example shown in the figure, a substrate 99 is grounded. Thus, the voltage to ground for the substrate 99 is either 0 V or approximately 0 V in the state where positive potentials are applied to the electrospinning nozzles 112. In another example, the substrate 99 is not grounded. For example, when an electrospinning apparatus including a guide roller configured to convey the substrate 99 is used, a potential having a polarity opposite to that of the potentials applied to the electrospinning nozzles 112 is applied to the guide roller by the power supply 130 or a power supply different from the power supply 130. By applying the potential to the guide roller made of an electrically conductive material, the potential can be indirectly applied to the substrate 99.

The electrospinning nozzles 112 are arranged in such a manner that, for example, the ejection port 117 faces a principal surface of the substrate 99. In one example, the diameter of the ejection port 117 is from 200 µm to 500 µm.

Through application of potential to the electrospinning head 110 by the power supply 130 in the state where the material liquid has been supplied to the electrospinning head 110 by the material liquid supply source 120, the material liquid is electrified in the same polarity as the electrospinning head 110. Alternatively, through application of potential to the electrospinning head 110 followed by supply of the material liquid to the electrospinning head 110, the material liquid is electrified in the same polarity as the electrospinning head 110. Electrifying the material liquid in the same polarity as the electrospinning head 110 causes a potential difference, i.e., a voltage, between the material liquid of the electrospinning head 110 (electrospinning nozzle 112) and the substrate 99. The voltage between the electrospinning head 110 (electrospinning nozzle 112) and the substrate 99 causes the material liquid to be ejected toward the substrate 99. Through ejection of the material liquid from the ejection ports 117 of the electrospinning nozzles 112 toward the substrate 99, the fiber 1 is deposited onto the surface of the substrate 99, and the fiber film 10 is formed by the deposited fiber 1. Namely, the fiber film 10 containing the fiber 1 is formed by the electrospinning method (sometimes referred to as an "electric charge induction spinning method").

The voltage applied between the electrospinning head 110 and the substrate 99, that is, the potential difference between the electrospinning nozzles 112 and the substrate 99, is adjusted as appropriate in accordance with the species of material for composing the fiber such as polymer contained in the material liquid, a distance from the electrospinning nozzles 112 to the substrate 99, and the like. In one example, a direct-current voltage of from 10 kV to 100 kV is applied between the substrate 99 and the electrospinning nozzles 112.

The controller 140 is, for example, a computer. The controller 140 includes a processor including a central processing unit (CPU), an application specific integrated circuit (ASIC), a field programmable gate array (FPGA), etc.) or an integrated circuit (control circuit), and a storage medium such as a memory. The controller 140 may include only one integrated circuit or the like, or may include a plurality of integrated circuits or the like. The controller 140 executes a program or the like stored in the storage medium, etc., to perform processing. The controller 140 controls the driving of the material liquid supply drive 122, the operation of the material liquid supply adjuster 123, the output from the power supply 130, and the like.

The material liquid ejected from the ejection port 117 of the electrospinning nozzle 112 moves toward the principal surface of the substrate 99 while changing into the fiber 1, and is deposited onto the substrate 99. Although not shown in the figure, the remaining solvent is volatilized by drying the fiber film 10 formed from the deposited fiber 1. The drying means is not particularly limited, and for example, drying using infrared rays or hot air can be performed. Here, for example, in a case of using a material liquid obtained by dispersing an adsorbing element having acid gas adsorption ability in a solution in which a constituent material of the fiber is dissolved, the distribution of the adsorbing element within the fiber 1 after drying can be controlled by appropriately adjusting the drying conditions. For example, when the fiber is instantaneously dried at a high temperature, the adsorbing element tends to be uniformly distributed in the radial cross-section of the fiber 1. Alternatively, when the fiber is naturally dried at room temperature, the concentration of the adsorbing element tends to increase near the outer periphery in the radial cross-section of the fiber 1.

The fiber film 10 formed on the surface of the substrate 99 may be pressed. By rolling (pressing) the fiber film 10, the fiber film 10 is compressed, so that the strength of the fiber film 10 can be increased. In addition, compression can increase the amount of nanofibers per volume, and thus the amount of adsorbing elements per volume. The pressing is preferably performed after the fiber film 10 is dried. Performing drying before pressing can more reliably evaporate the remaining solvent of the material liquid.

The fiber film 10 can be recovered from the substrate 99 and used. Depending on the orientation of the fiber 1 deposited on the substrate 99, the fiber film may be obtained, or the fiber 1 that can be recovered in a fiber form may be obtained instead of the fiber film 10. For example, the orientation of the deposited fiber 1 can be controlled by appropriately selecting the design of the substrate 99. In one example, the fiber 1 can be recovered in a fiber form by using a disk collector as the substrate 99.

In addition, an existing product may be used as the substrate 99, whereby a fiber structure body containing the fiber 1 can be provided on the product, and an acid gas adsorbing-releasing material imparted with acid gas adsorption ability can be manufactured. Alternatively, instead of replacing the substrate 99 itself with the product, the fiber structure body can be formed on the product by carrying the product on a support on which grounding or potential application can be performed similarly to the substrate 99 and performing electrospinning. That is, the fiber structure body can be formed on any member of choice, so as to manufacture an acid gas adsorbing-releasing material in any form of choice.

### (Measurement)

Whether or not the fiber contains an adsorbing element can be examined, for example, by performing mass spectrometry on the nanofiber or the fiber film. The distribution of the adsorbing element in the fiber can be analyzed by, for example, analysis by Scanning Electron Microscope-Energy Dispersive X-ray Spectroscopy (SEM-EDS), in which a scanning electron microscope and energy dispersive X-ray spectroscopy are combined.

### EXAMPLES

Examples will be described below, but none of the embodiments are limited to the following examples.

### <Manufacture of fiber film>

### (Examples 1 to 4)

A fiber containing polyvinyl alcohol (PVA) as an element having gas adsorption ability was deposited onto a supporting substrate by the ES method, to obtain fiber films. More specifically, as shown in Table 1 below, fiber films respectively including fibers made of PVA and having a solid structure (Example 1), a hollow structure (Example 2), and a porous structure (Example 3), and a fiber having a core-sheath structure (Example 4) including a core made of polystyrene (PS) and a sheath made of PVA were produced.

### (Examples 5 to 8)

A fiber containing polyethyleneimine (PEI) as an element having gas adsorption ability was deposited onto a supporting substrate by the ES method, to obtain fiber films. More specifically, as shown below in Table 1, fiber films respectively including fibers made of PEI and having a solid structure (Example 5), a hollow structure (Example 6), and a porous structure (Example 7), and a fiber having a core-sheath structure (Example 8) including a core made of PVA and a sheath made of PEI were produced.

### (Examples 9 and 10)

A fiber containing ethanolamine as an element having gas adsorption ability was deposited onto a supporting substrate by the ES method, to obtain fiber films. More specifically, as shown below in Table 1, fiber films including a composite fiber having a solid structure, in which PVA was used as a primary component of the fiber and ethanolamine was dispersed therein, were manufactured. Regarding the distribution of ethanolamine dispersed in the fiber, the manufactured fiber films were respectively, a film with uniform dispersion (Example 9) and a film in which the concentration of ethanolamine was increased on the outer peripheral surface of the fiber (Example 10).

### (Example 11)

A fiber having a solid structure and containing polyimide as an element having a gas adsorption ability was deposited onto a supporting substrate by the ES method, to obtain a fiber film.

### (Examples 12 and 13)

A fiber containing piperazine as an element having gas adsorption ability was deposited onto a supporting substrate by the ES method, to obtain fiber films. More specifically, as shown below in Table 1, fiber films including a composite fiber having a solid structure, in which PVA was used as a primary component of the fiber and piperazine was dispersed therein, were manufactured. Regarding the distribution of piperazine dispersed in the fiber, the manufactured fiber films were respectively a film with uniform dispersion (Example 12) and a film in which the concentration of piperazine was increased on the outer peripheral surface of the fiber (Example 13).

### (Examples 14 to 16)

A fiber containing arginine as an element having gas adsorption ability was deposited onto a supporting substrate by the ES method, to obtain fiber films. More specifically, as shown below in Table 2, fiber films including a fiber made of an arginine-containing oligopeptide and having a solid structure (Example 14) and a composite fiber having a solid structure, in which PVA was used as a primary component of the fiber and arginine was dispersed therein, were manufactured. Regarding the distribution of arginine dispersed in the fiber, the fiber films in which arginine was dispersed in PVA were respectively a film with uniform dispersion (Example 15) and a film in which the concentration of arginine was increased on the outer peripheral surface of the fiber (Example 16).

### (Example 17)

A fiber containing imidazolium-based ionic liquid as an element having gas adsorption ability was deposited onto a supporting substrate by the ES method, to obtain a fiber film. More specifically, as shown below in Table 2, a fiber film including a composite fiber having a solid structure, in which PVA was used as a primary component of the fiber and an ionic liquid was dispersed therein, was manufactured.

### (Example 18)

A fiber film containing a fiber having a core-sheath structure and containing an imidazolium-based ionic liquid as an element having gas adsorption ability was obtained, as follows. First, a PVA fiber having a solid structure was deposited onto a supporting substrate by the ES method, to obtain a fiber film. An ionic liquid was applied to the obtained fiber film to obtain a fiber film containing a fiber having a core-sheath structure including a PVA core and an ionic liquid sheath.

### (Examples 19 and 20)

A fiber containing zeolite as an element having gas adsorption ability was deposited onto a supporting substrate by the ES method, to obtain fiber films. More specifically, as shown below in Table 2, fiber films including a composite fiber having a solid structure, in which PVA was used as a primary component of the fiber and a zeolite powder was dispersed therein, were manufactured. Regarding the distribution of zeolite dispersed in the fiber, the manufactured fiber films were respectively a film with uniform dispersion (Example 19) and a film in which the concentration of zeolite was increased on the outer peripheral surface of the fiber (Example 20).

### (Example 21)

A fiber film containing a fiber containing zeolite as an element having gas adsorption ability was obtained, as follows. First, a PVA fiber having a solid structure was deposited onto a supporting substrate by the ES method, to obtain a fiber film. A zeolite powder was supported on the surface of the obtained fiber film to obtain a fiber film.

### (Example 22)

A fiber made of an amino group-containing porous coordination polymer as an element having gas adsorption ability was deposited onto a supporting substrate by the ES method, to obtain a fiber film having a porous structure.

### (Examples 23 and 24)

A fiber containing a transition metal complex as an element having gas adsorption ability was deposited onto a supporting substrate by the ES method, to obtain a fiber film. A ruthenium complex was added as the transition metal complex. More specifically, as shown below in Table 2, fiber films including a composite fiber having a solid structure, in which PVA was used as a primary component of the fiber and the transition metal complex was dispersed therein, were manufactured. Regarding the distribution of the transition metal complex dispersed in the fiber, the manufactured fiber films were respectively a film with uniform dispersion (Example 23) and a film in which the concentration of the transition metal complex was increased on the outer peripheral surface of the fiber (Example 24).

### (Example 25)

A fiber film containing a fiber containing a transition metal complex as an element having gas adsorption ability was obtained, as follows. First, a PVA fiber having a solid structure was deposited onto a supporting substrate by the ES method, to obtain a fiber film. A ruthenium complex was supported on the surface of the obtained fiber film to obtain a fiber film.

### <Performance evaluation>

Carbon dioxide (CO₂) adsorption-release performance by each fiber film was evaluated as follows. The fiber film was allowed to stand for 24 hours under an environment of standard temperature and standard pressure (25°C, 1 atm) and a relative humidity of 50%. Thereafter, CO₂ was released from the fiber film by heating, a decrease in pressure, or an increase in humidity, and the amount of CO₂ recovered at this time was measured.

From the amount of CO₂ recovered, the amount (in mg) of CO₂ that can be adsorbed per g of the nanofiber film was calculated to evaluate the adsorption performance of the fiber film. The evaluation was "small" when the adsorption amount of CO₂ was less than 0.1 mg, the evaluation was "medium" when the adsorption amount was from 0.1 mg to 2 mg, and the evaluation was "large" when the adsorption amount was more than 2 mg.

The release performance was evaluated according to the method required for releasing CO₂ from the fiber film. The evaluation was "low" when heating at a high temperature exceeding 100°C was required, the evaluation was "medium" when heating at 100°C or lower was required, and the evaluation was "high" when CO₂ could be released at room temperature (15°C to 25°C) by a means other than heating, that is, by reduced pressure or humidity adjustment.

The evaluation results are shown in Tables 1 and 2 below. In addition, Tables 1 and 2 show the form of the fiber contained in each fiber film, the analogous structure among those illustrated in FIGS. 1 to 7, the element exhibiting the gas adsorption ability and the manner of including the element, and any other constituent component when the fiber contains such a component.

**[Table 1]**

| | Form of fiber | Figure with analogous structure | Element having gas adsorption ability | Manner of including gas adsorbing element | Other constituent components | CO₂ adsorption amount | CO₂ release efficiency |
|---|---|---|---|---|---|---|---|
| Example 1 | Solid structure | FIG. 1 | PVA | Primary constituent component of fiber | None | Small | Medium |
| Example 2 | Hollow structure | FIG. 3 | PVA | Primary constituent component of fiber | None | Small | High |
| Example 3 | Porous structure | FIG. 4 | PVA | Primary constituent component of fiber | None | Small | High |
| Example 4 | Core-sheath structure | FIG. 2 | PVA | Primary constituent component of sheath | PS (core) | Small | Medium |
| Example 5 | Solid structure | FIG. 1 | PEI | Primary constituent component of fiber | None | Large | Medium |
| Example 6 | Hollow structure | FIG. 3 | PEI | Primary constituent component of fiber | None | Medium | High |
| Example 7 | Porous structure | FIG. 4 | PEI | Primary constituent component of fiber | None | Large | High |
| Example 8 | Core-sheath structure | FIG. 2 | PEI | Primary constituent component of sheath | PVA (core) | Medium | Medium |
| Example 9 | Solid structure | FIG. 1 | Ethanolamine | Uniformly dispersed in fiber | PVA (Primary component) | Medium | Medium |
| Example 10 | Solid structure | FIG. 1 | Ethanolamine | Dispersed in distribution with high concentration at fiber surface | PVA (Primary component) | Large | Medium |
| Example 11 | Solid structure | FIG. 1 | Polyimide | Primary constituent component of fiber | None | Large | Medium |
| Example 12 | Solid structure | FIG. 1 | Piperazine | Uniformly dispersed in fiber | PVA (Primary component) | Medium | Medium |
| Example 13 | Solid structure | FIG. 1 | Piperazine | Dispersed in distribution with high concentration at fiber surface | PVA (Primary component) | Large | Medium |

**[Table 2]**

| | Form of fiber | Figure with analogous structure | Element having gas adsorption ability | Manner of including gas adsorbing element | Other constituent components | CO₂ adsorption amount | CO₂ release efficiency |
|---|---|---|---|---|---|---|---|
| Example 14 | Solid structure | FIG. 1 | Arginine-containing oligopeptide | Primary constituent component of fiber | None | Large | Medium |
| Example 15 | Solid structure | FIG. 1 | Arginine | Uniformly dispersed in fiber | PVA (Primary component) | Medium | High |
| Example 16 | Solid structure | FIG. 1 | Arginine | Dispersed in distribution with high concentration at fiber surface | PVA (Primary component) | Large | High |
| Example 17 | Solid structure | FIG. 1 | Imidazolium-based ionic liquid | Dispersed in distribution with high concentration at fiber surface | PVA (Primary component) | Large | Medium |
| Example 18 | Core-sheath structure | FIG. 7 | Imidazolium-based ionic liquid | Applied to fiber surface | PVA (core) | Medium | Medium |
| Example 19 | Solid structure | FIG. 1 | Zeolite | Uniformly dispersed in fiber | PVA (Primary component) | Medium | Low |
| Example 20 | Solid structure | FIG. 1 | Zeolite | Dispersed in distribution with high concentration at fiber surface | PVA (Primary component) | Large | Low |
| Example 21 | Solid structure | FIG. 6 | Zeolite | Supported on fiber surface | PVA (Primary component) | Medium | Low |
| Example 22 | Porous structure | FIG. 4 | Amino group-containing porous coordination polymer | Primary constituent component of fiber | None | Large | Medium |
| Example 23 | Solid structure | FIG. 1 | Transition metal complex | Uniformly dispersed in fiber | PVA (Primary component) | Medium | Medium |
| Example 24 | Solid structure | FIG. 1 | Transition metal complex | Dispersed in distribution with high concentration at fiber surface | PVA (Primary component) | Large | Medium |
| Example 25 | Solid structure | FIG. 6 | Transition metal complex | Supported on fiber surface | PVA (Primary component) | Medium | Medium |

As a basic tendency, the gas adsorbing element containing an amino group has a higher gas adsorption ability. In the fiber films of Examples 1 to 4 using polyvinyl alcohol (PVA) containing no amino group, the evaluation of the CO₂ adsorption amount was "small". Conversely, due to weak bonding between PVA and CO₂, the CO₂ release efficiency was evaluated as "high" in these examples.

Among the gas adsorbing elements used in the above examples, elements other than polyvinyl alcohol had a high gas adsorption ability. Due to this, a high CO₂ adsorption amount tended to be easily obtained in the examples in which the primary portion of the fiber was formed of a gas adsorbing element other than PVA or the examples in which the concentration of the gas adsorbing element other than PVA on the fiber surface was increased. However, regarding the release efficiency, high-temperature heating was required for CO₂ release from zeolite, whereby the release efficiency was evaluated as "low" in the example using zeolite.

According to at least one embodiment described above, a fiber, a fiber film containing the fiber, and acid gas adsorbing-releasing materials including the fiber and the fiber film are provided. The fiber contains an adsorbing element having acid gas adsorption ability. Using the fiber, the fiber film, and the acid gas adsorbing-releasing materials, the adsorption-release of an acid gas can be performed with high efficiency.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Several embodiments relevant to the present disclosure are given below.
1. A fiber comprising an adsorbing element having an acid gas adsorption ability.
2. The fiber according to clause 1, wherein the fiber reversibly adsorbs and releases an acid gas according to a change in atmospheric conditions.
3. The fiber according to clause 1 or 2, wherein the adsorbing element comprises one or more selected from the group consisting of polymer components, chain amines, cyclic amines, amino acids, amino acid salts, ionic liquids, porous ceramics, and organic-metal complexes.
4. The fiber according to any one of clauses 1 to 3, wherein a concentration of the adsorbing element is higher at an outer periphery than at a center in a radial cross section.
5. The fiber according to any one of clauses 1 to 3, wherein the adsorbing element is contained in an element located on a surface.
6. The fiber according to any one of clauses 1 to 3, comprising vacancy.
7. The fiber according to clause 5, comprising vacancy.
8. A fiber film comprising the fiber according to any one of claims 1 to 7.
9. An acid gas adsorbing-releasing material comprising:
   a member; and
   a fiber structure body on the member,
   the fiber structure body comprising the fiber according to any one of clauses 1 to 7.
10. An acid gas adsorbing-releasing material comprising:
   a member; and
   a fiber structure body on the member,
   the fiber structure body comprising the fiber film according to clause 8.

## Claims

1. A fiber (1) comprising an adsorbing element having an acid gas adsorption ability.

2. The fiber (1) according to claim 1, wherein the fiber reversibly adsorbs and releases an acid gas according to a change in atmospheric conditions.

3. The fiber (1) according to claim 1 or 2, wherein the adsorbing element comprises one or more selected from the group consisting of polymer components, chain amines, cyclic amines, amino acids, amino acid salts, ionic liquids, porous ceramics, and organic-metal complexes.

4. The fiber (1) according to any one of claims 1 to 3, wherein the adsorbing element is contained in an element located on a surface.

5. The fiber (1) according to any one of claims 1 to 3, wherein a concentration of the adsorbing element is higher at an outer periphery than at a center in a radial cross section.

6. The fiber (1) according to any one of claims 1 to 4, comprising vacancy.

7. A fiber film (10) comprising the fiber (1) according to any one of claims 1 to 7.

8. An acid gas adsorbing-releasing material comprising:
a member; and
a fiber structure body on the member,
the fiber structure body comprising the fiber (1) according to any one of claims 1 to 7.

9. An acid gas adsorbing-releasing material comprising:
a member; and
a fiber structure body on the member,
the fiber structure body comprising the fiber film (10) according to claim 7.
